(19) Europäisches Patentamt
European Patent Office
Office européen des brevets

(11) **EP 3 049 474 B1**

(12) **EUROPÄISCHE PATENTSCHRIFT**

(45) Veröffentlichungstag und Bekanntmachung des Hinweises auf die Patenterteilung:
**14.02.2018 Patentblatt 2018/07**

(21) Anmeldenummer: **14739399.5**

(22) Anmeldetag: **11.07.2014**

(51) Int Cl.:
*C08L 7/00* (2006.01)     *B60C 1/00* (2006.01)
*B29B 7/74* (2006.01)

(86) Internationale Anmeldenummer:
**PCT/EP2014/064881**

(87) Internationale Veröffentlichungsnummer:
**WO 2015/043790 (02.04.2015 Gazette 2015/13)**

(54) **SCHWEFELVERNETZBARE KAUTSCHUKMISCHUNG UND FAHRZEUGLUFTREIFEN**

SULPHUR-CROSSLINKABLE RUBBER MIXTURE AND MOTOR VEHICLE TYRES

MÉLANGE DE CAOUTCHOUC RÉTICULABLE AU SOUFRE ET PNEU DE VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.09.2013 DE 102013110720**

(43) Veröffentlichungstag der Anmeldung:
**03.08.2016 Patentblatt 2016/31**

(73) Patentinhaber: **Continental Reifen Deutschland GmbH**
**30165 Hannover (DE)**

(72) Erfinder:
• **PETERS, Fabian**
**30173 Hannover (DE)**
• **TORBRÜGGE, Thorsten**
**30855 Langenhagen (DE)**
• **RECKER, Carla**
**30167 Hannover (DE)**

(74) Vertreter: **Finger, Karsten**
**Continental Aktiengesellschaft**
**Patente und Lizenzen**
**Postfach 169**
**30001 Hannover (DE)**

(56) Entgegenhaltungen:
EP-A1- 2 452 972          DE-A1-102008 062 368
US-A- 3 846 352           US-A1- 2010 139 825
US-A1- 2010 317 800       US-A1- 2012 267 026

• **Eastman Chemical ET AL: "Product Data Piccotac(TM) 1100-E Hydrocarbon Resin", , 1. Oktober 2010 (2010-10-01), XP055143595, Gefunden im Internet: URL:http://www.eastman.com/supplemental/unrestricted/44/Piccotac1100EHydrocarbonResin.pdf [gefunden am 2014-09-30]**

EP 3 049 474 B1

**Beschreibung**

Die Erfindung betrifft eine schwefelvernetzbare Kautschukmischung, insbesondere für Laufstreifen von Fahrzeugluftreifen, und einen Fahrzeugluftreifen.

Harze, insbesondere Kohlenwasserstoffharze, sind seit langem bekannte Zuschlagstoffe für Kautschukmischungen für Laufstreifen von Fahrzeugluftreifen. Sie dienen vor allem als Verarbeitungshilfsmittel und bewirken die nötige Grünklebrigkeit der Kautschukmischungen. Ferner lassen sich durch Harze bestimmte Vulkanisateigenschaften wie Härte, Modul und Quellverhalten beeinflussen. Sie können auch als Vulkanisationsharze oder Haftvermittler eingesetzt werden. Typische in der Kautschukindustrie eingesetzte Klebharze sind z.B. Petroleumharze, Terpenharze, Kolophoniumharze, Phenol-Formaldehydharze und Cumaron-Inden-Harze.

Aliphatische Harze aus Monomeren der C5-Erdölfraktion bzw. C5-haltige Copolymere sind als Zuschlagstoffe für Kautschukmischungen bekannt.

So wird beschreibt die WO 2006/061064 A1 die Verwendung von 5 bis 35 phr eines $C_5$/Vinylaromatischem Copolymer in Kombination mit 5 bis 35 phr MES oder TDAE-Öl in einer Kautschukmischung, wobei eine Kautschukmischung mit einem Polymerblend bestehend aus Styrol-Butadien-Kautschuk und Butadien-Kautschuk offenbart wird.

Die EP 1707595 B1 offenbart eine Kautschukmischung für eine Seitenverstärkungslage oder einen Wulstkernreiter, die 1 bis 20 phr eines $C_5$-basierten Petroleumharzes enthält.

In der EP 0978533 B1 wird eine Kautschukmischung beschrieben, die 21,5 phr eines Kohlenwasserstoffharzes aus 2-Methyl-2-Buten und 1,3-Pentadien und Dicyclopentadien in Kombination mit 100 phr Styrol-Butadien-Kautschuk enthält.

Die DE 102008062368 A1 offenbart eine Haftklebemasse auf Basis von Naturkautschuk und Polyacrylaten enthaltend eine Klebharz-Komponente. Die Haftklebemasse findet insbesondere Verwendung als Selbstklebeband mit verbesserten Eigenschaften.

Die US 3846352 offenbart eine Zusammensetzung, die Kohlenwasserstoffharze mit einem Erweichungspunkt von 60 bis 110 °C enthält, wobei das Harz aus verschiedenen Monomeren aufgebaut ist.

Dem Produktdatenblatt zu dem Kohlenwasserstoffharz Piccotac™ 1100-E ist zu entnehmen, dass dieses Harz einen Erweichungspunkt von 99 °C und eine Zentrifugenmittelwert Mz der Molekulargesichtsverteilung von 6800 g/mol aufweist.

Als Verwendung wird der Einsatz in Klebemassen und Beschichtungen vorgeschlagen.

Die US 20120267026 A1 offenbart Kautschukmischungen für Fahrzeugreifen, die Naturkautschuk, verschiedene Kohlenwasserstoffharze und Ruß als Füllstoff offenbart.

Die EP 2452972 A1 offenbart Kautschukmischungen für Fahrzeugreifen, die u. a. Naturkautschuk, bis zu 14 phr an Kohlenwasserstoffharz und Ruß als Füllstoff enthält.

Die US 20100317800 A1 offenbart Kautschukmischungen für Fahrzeugreifen, die SSBR und BR als Kautschukkomponenten, bis zu 12 phr Kohlenwasserstoffharz sowie Kieselsäure und Ruß als Füllstoffe offenbart.

Die US 20100139825 A1 offenbart eine Kautschukmischung einer Unterplatte im Fahrzeugreifen, wobei die Mischung Naturkautschuk, Ruß als Füllstoff und 3 phr Klebharz enthält.

Der Verwendung von größeren Mengen Harz sind im Stand der Technik jedoch aufgrund der begrenzten Löslichkeit im Polymersystem der jeweiligen Kautschukmischung Grenzen gesetzt.

Der Erfindung liegt nun die Aufgabe zugrunde, eine schwefelvernetzbare Kautschukmischung bereitzustellen, die ausgehend vom Stand der Technik eine weitere Verbesserung im Zielkonflikt Rollwiderstandsverhalten versus Nassgriffeigenschaften bei gleichzeitig verbesserten oder zumindest gleichen Reißeigenschaften zeigt.

Gelöst wird die Aufgabe erfindungsgemäß dadurch, dass die schwefelvernetzbare Kautschukmischung wenigstens folgende Bestandteile enthält:

- 40 bis 100 phr wenigstens eines natürlichen und/oder synthetischen Polyisoprens und
- 15 phr oder mehr wenigstens eines Kohlenwasserstoffharzes, welches zu 50 bis 100 Gew.-% aus aliphatischen $C_5$-Monomeren und zu 0 bis 50 Gew.-% aus weiteren Monomeren aufgebaut ist, wobei das Kohlenwasserstoffharz gemäß Formel I) ein Q von 0,015 [°C·mol/g] bis 0,05 [°C·mol/g] aufweist:

  I) Q = Erweichungspunkt [°C]/ Zentrifugenmittelwert Mz [g/mol], und wobei das Kohlenwasserstoffharz einen Erweichungspunkt gemäß ASTM E 28 (Ring und Ball) von 60 bis 200 °C aufweist; und

  - 10 bis 300 phr wenigstens einer Kieselsäure.

Dem Fachmann ist klar, dass Kohlenwasserstoffharze Polymere sind, die aus Monomeren aufgebaut sind, wobei das Kohlenwasserstoffharz durch die Verknüpfung der Monomere zueinander formal aus Derivaten der Monomere aufgebaut ist.

Überraschenderweise liegt die erfindungsgemäße Kautschukmischung im Vergleich zum Stand der Technik auf einem höheren Performance-Niveau hinsichtlich der Indikatoren für Rollwiderstand und Nassgriff. Insbesondere weist die erfindungsgemäße Kautschukmischung auch bei vergleichsweise hohen Mengen des Kohlenwasserstoffharzes von 30 phr oder mehr überraschenderweise eine starke Verschiebung der Glasübergangstemperatur ausgehend von der Glasübergangstemperatur des natürlichen und/oder synthetischen Polyisoprens auf. Dies deutet auf eine überraschend gute Löslichkeit des Kohlenwasserstoffharzes in natürlichem und/oder synthetischem Polyisopren hin.

Die in dieser Schrift verwendete Angabe phr (Parts per hundred Parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

Die oben genannten Kohlenwasserstoffharze werden im Rahmen dieser Erfindung nicht als Kautschuk betrachtet.

Die erfindungsgemäße Kautschukmischung enthält 40 bis 100 phr, bevorzugt 50 bis 100 phr, besonders bevorzugt 60 bis 100 phr, ganz besonders bevorzugt 70 bis 100 phr, wiederum ganz besonders bevorzugt 80 bis 100 phr, wenigstens eines natürlichen und/oder synthetischen Polyisoprens. Hierunter ist zu verstehen, dass die Kautschukmischung wenigstens ein natürliches Polyisopren in den genannten Mengen oder wenigstens ein synthetisches Polyisopren in den genannten Mengen oder eine Mischung aus wenigstens einem natürlichen und wenigstens einem synthetischen Polyisopren enthalten kann, wobei im letzteren Fall die genannten Mengen die Gesamtmenge aus natürlichem und synthetischem Polyisopren sind.

Bei dem natürlichen Polyisopren und/oder synthetischen Polyisopren kann es sich um alle dem Fachmann bekannten Typen handeln. Dabei kann es sich sowohl um cis-1,4-Polyisopren als auch um 3,4-Polyisopren handeln. Bevorzugt ist allerdings die Verwendung von cis-1,4-Polyisoprenen mit einem cis-1,4-Anteil größer als 90 Gew.-%. Zum einen kann solch ein Polyisopren durch stereospezifische Polymerisation in Lösung mit Ziegler-Natta-Katalysatoren oder unter Verwendung von fein verteilten Lithiumalkylen erhalten werden. Zum anderen handelt es sich bei Naturkautschuk (NR) um ein solches cis-1,4 Polyisopren, der cis-1,4-Anteil im Naturkautschuk ist größer 99 Gew.-%. Das natürliche und/oder synthetische Polyisopren kann mittels im Stand der Technik bekannten Gruppen modifiziert sein, so kann es sich bei dem natürlichen Polyisopren bspw. auch um epoxidierten Naturkautschuk handeln.

In einer bevorzugten Ausführungsform der Erfindung enthält die Kautschukmischung 40 bis 100 phr, bevorzugt 50 bis 100 phr, besonders bevorzugt 60 bis 100 phr, ganz besonders bevorzugt 70 bis 100 phr, wiederum ganz besonders bevorzugt 80 bis 100, weiter besonders bevorzugt 100 phr wenigstens eines natürlichen Polyisoprens (Naturkautschuk).

Die erfindungsgemäße Kautschukmischung enthält 15 phr oder mehr, bevorzugt 15 bis 300 phr, besonders bevorzugt 15 bis 150 phr, ganz besonders bevorzugt 25 bis 100 phr, wiederum ganz besonders bevorzugt 36 bis 100 phr, wiederum ganz besonders bevorzugt 40 bis 100 phr, wiederum ganz besonders bevorzugt 45 bis 100 phr, wiederum ganz besonders bevorzugt 45 bis 75 phr, wenigstens eines Kohlenwasserstoffharzes, welches zu 50 bis 100 Gew.-% (Gewichtsprozent bezogen auf die Gesamtmasse des Kohlenwasserstoffharzes) aus aliphatischen $C_5$-Monomeren und zu 0 bis 50 Gew.-% aus weiteren Monomeren aufgebaut ist. Hierbei ist es denkbar, dass das Kohlenwasserstoffharz aus einem oder mehreren verschieden aliphatischen $C_5$-Monomeren sowie aus einem oder mehreren verschiedenen weiteren Monomeren aufgebaut ist.

Es ist ferner z.B. auch denkbar, dass die erfindungsgemäße Kautschukmischung ein Gemisch verschiedener Kohlenwasserstoffharze mit den genannten Merkmalen enthält.

Bevorzugt ist das Kohlenwasserstoffharz zu 55 bis 100 Gew.-%, aus aliphatischen $C_5$-Monomeren aufgebaut. Gemäß Römpp Online Lexikon, Version 3.36 ist "aliphatische Verbindungen" eine "Sammelbezeichnung [...] für funktionalisierte oder unfunktionalisierte organische Verbindungen, die kein aromatisches Ringsystem enthalten."

Bei den aliphatischen C5-Monomeren kann es sich um Monomere der C5-Erdölfraktion, z.B. Isopren, und/oder Monomere der Terpene und/oder Cycloolefine und/oder Olefine, wie z.B. Penten, handeln. Unter C5 ist zu verstehen, dass diese Monomere aus fünf Kohlenstoffatomen aufgebaut sind.

Ferner ist dem Fachmann bekannt, dass die C5-Erdölfraktion außer aliphatischen Monomeren mit fünf Kohlenstoffatomen andere aliphatische Monomere (Bausteine) mit z.B. vier, also C4-Monomere, oder sechs Kohlenstoffatomen, C6-Monomere, enthalten kann.

Der Einfachheit halber werden diese, also z.B. C4- und C6-Monomere, im Rahmen der vorliegenden Erfindung unter den weiteren Monomeren genannt und als aliphatische ungesättigte C4-Monomere bzw. aliphatische ungesättigte C6-Monomere bezeichnet.

Das oder die aliphatischen C5-Monomer(e) sind ausgewählt aus der Gruppe enthaltend Isopren und/oder trans-1,3-Pentadien und/oder cis-1,3-Pentadien und/oder 2-Methyl-2-buten und/oder 1-Penten und/oder 2-Penten.

Gemäß einer bevorzugten Weiterbildung der Erfindung ist das bzw. sind die aliphatischen C5-Monomere ausgewählt aus der Gruppe bestehend aus Isopren und/oder trans-1,3-Pentadien und/oder cis-1,3-Pentadien und/oder 2-Methyl-2-buten und/oder 1-Penten und/oder 2-Penten.

Das oder die weiteren Monomer(e) sind ausgewählt aus der Gruppe ungesättigter Verbindungen, die kationisch polymerisiert werden können, enthaltend Aromaten und/oder Terpene und/oder Alkene und/oder Cycloalkene, wobei die oben beschriebenen in der C5-Erdölfraktion enthaltenen aliphatischen Monomere mit mehr oder weniger als fünf Kohlenstoffatomen ebenfalls unter die weiteren Monomere fallen.

Bei den Aromaten kann es sich beispielsweise um alpha-Methylstyrol und/oder Styrol und/oder Vinyltoluol und/oder Inden und/oder Cumaron und/oder Methylinden und/oder Methylcumaron und/oder Phenol handeln.

Gemäß Römpp Online Lexikon, Version 3.36 ist der Begriff "olefine" die "Gruppenbezeichnung für acyclische und cyclische aliphatische Kohlenwasserstoffe mit einer oder mehreren reaktiven C,C-Doppelbindungen im Molekül, die heute besser als Alkene bzw. Cycloalkene bezeichnet werden, in weiterem Sinne auch Bezeichnung für deren substituierte Derivate...." Im Rahmen der vorliegenden Erfindung werden daher ungesättigte Terpene, Alkene und Cycloalkene unter den Oberbegriff Olefine zusammengefasst.

Bei den Alkenen kann es sich beispielsweise um 1-Buten und/oder 2-Buten und/oder Butadien handeln.

Somit ist das oder sind die weiteren Monomer(e) ausgewählt aus der Gruppe enthaltend alpha-Methylstyrol und/oder Styrol und/oder Vinyltoluol und/oder Inden und/oder Cumaron und/oder Methylinden und/oder Methylcumaron und/oder Phenol und/oder Olefine, wie ungesättigte Terpene und/oder Alkene, wie z.B. 1-Buten und/oder 2-Buten und/oder Butadien.

Bevorzugt ist das oder sind die weiteren Monomer(e) ausgewählt aus der Gruppe bestehend aus alpha-Methylstyrol und/oder Styrol und/oder Vinyltoluol und/oder Inden und/oder Cumaron und/oder Methylinden und/oder Methylcumaron und/oder Phenol und/oder Olefinen, wie z.B. 1-Buten und/oder 2-Buten und/oder Butadien.

Besonders bevorzugt ist das oder sind die weiteren Monomer(e) ausgewählt aus der Gruppe bestehend aus alpha-Methylstyrol und/oder Styrol und/oder Vinyltoluol und/oder Inden und/oder Cumaron und/oder Methylinden und/oder Methylcumaron und/oder Phenol und/oder aliphatischen ungesättigten C4-Monomeren, wie z.B. 1-Buten und/oder 2-Buten und/oder Butadien, und/oder aliphatischen ungesättigten C6-Monomeren.

Bei dem Vinyltoluol (auch ar-Methylstyrol) kann es sich um p-Vinyltoluol und/oder m-Vinyltoluol und/oder o-vinyltoluol handeln.

Das Kohlenwasserstoffharz kann ein Homopolymer oder ein Copolymer sein. Unter Homopolymer wird in der vorliegenden Anmeldung ein Polymer verstanden, welches gemäß Römpp Online Version 3.28 "aus Monomeren nur einer Art entstanden ist". Unter Copolymer wird im Rahmen der vorliegenden Erfindung ein Polymer verstanden, welches aus mehreren, d.h. zwei oder mehr, verschiedenen Monomeren aufgebaut ist. Im Rahmen der vorliegenden Erfindung kann das Kohlenwasserstoffharz daher z.B. auch ein Copolymer aus drei verschiedenen Monomeren sein.

In einer bevorzugten Ausführungsform der Erfindung ist das Kohlenwasserstoffharz zu 55 bis 65 Gew.-%, bevorzugt 58 bis 62 Gew.-% aus aliphatischen $C_5$-Monomeren und zu 35 bis 45 Gew.%, bevorzugt 38 bis 42 Gew.-% aus weiteren Monomeren aufgebaut. Mit wenigstens einem derartigen Kohlenwasserstoffharz werden in der erfindungsgemäßen Kautschukmischung besonders gute Nassgriffeigenschaften erzielt, wobei die Rollwiderstandsindikatoren auf einem guten Niveau bleiben oder sogar ebenfalls verbessert werden.

In einer weiteren bevorzugten Ausführungsform der Erfindung ist das Kohlenwasserstoffharz zu 95 bis 100 Gew.-%, bevorzugt 100 Gew.-%, aus aliphatischen $C_5$-Monomeren und zu 0 bis 5 Gew.-% aus in der Erdölfraktion enthaltenen C4- oder C6-Monomeren aufgebaut. Mit wenigstens einem derartigen Kohlenwasserstoffharz werden in der erfindungsgemäßen Kautschukmischung besonders gute Rollwiderstandsindikatoren erzielt, wobei die Nassgriffeigenschaften auf einem guten Niveau bleiben oder sogar ebenfalls verbessert werden.

Das in der erfindungsgemäßen Kautschukmischung enthaltene Kohlenwasserstoffharz, weist einen Erweichungspunkt gemäß ASTM E 28 (Ring und Ball) von 60 bis 200 °C, bevorzugt 60 bis 150 °C, besonders bevorzugt 60 bis 120 °C, ganz besonders bevorzugt 60 bis 99 °C, und wiederum ganz besonders bevorzugt 80 bis 99 °C auf.

Weiterhin weist das in der erfindungsgemäßen Kautschukmischung enthaltene Kohlenwasserstoffharz bevorzugt ein Molekulargewicht Mw (Gewichtsmittel) von 500 bis 4000 g/mol, besonders bevorzugt 1000 bis 3000 g/mol, ganz besonders bevorzugt 1300 bis 2500 g/mol, wiederum besonders bevorzugt 1500 bis 2200 g/mol, wiederum ganz besonders bevorzugt 1500 bis 1900 g/mol, auf.

Weiterhin weist das in der erfindungsgemäßen Kautschukmischung enthaltene Kohlenwasserstoffharz bevorzugt ein Molekulargewicht Mz (Zentrifugenmittelwert) von 2500 bis 10000 g/mol, besonders bevorzugt 2500 bis 5000 g/mol, ganz besonders bevorzugt 3000 bis 4500 g/mol, wiederum besonders bevorzugt 3200 bis 4300 g/mol, wiederum ganz besonders bevorzugt 3400 bis 4100 g/mol.

Die Bestimmung des Molekulargewichtes (Gewichtsmittel Mw und Zentrifugenmittelwert Mz) erfolgt mittels Gelpermeationschromatographie gemäß DIN 55672-1 (GPC mit Tetrahydofuran als Elutionsmittel, Polystyrol-Standard; Größenausschlußchromatographie; engl. SEC = size exclusion chromatography).

Gemäß einer bevorzugten Weiterbildung der Erfindung ist das Kohlenwasserstoffharz zu 95 bis 100 Gew.-%, bevorzugt 100 Gew.-%, aus aliphatischen $C_5$-Monomeren und zu 0 bis 5 Gew.-% aus in der Erdölfraktion enthaltenen C4- oder C6-Monomeren aufgebaut und weist ein Mw von 1500 bis 2200 g/mol, wiederum ganz besonders bevorzugt 1500 bis 1900 g/mol, sowie ein Mz von 3200 bis 4300 g/mol, wiederum ganz besonders bevorzugt 3400 bis 4100 g/mol auf. Mit wenigstens einem derartigen Kohlenwasserstoffharz werden in der erfindungsgemäßen Kautschukmischung besonders gute Rollwiderstandsindikatoren erzielt, wobei sich eine überraschend gute Löslichkeit in natürlichem und/oder synthetischem Polyisopren, bevorzugt natürlichem Polyisopren, ergibt, was z.B. an der Verschiebung der Glasübergangstemperatur ausgehend von dem Polyisopren erkennbar ist.

Das in der erfindungsgemäßen Kautschukmischung enthaltene Kohlenwasserstoffharz weist einen möglichst hohen Erweichungspunkt bei einem möglichst niedrigen Zentrifugenmittelwert Mz des Molekulargewichtes auf. Drückt man dies in einem Quotienten Q gemäß Formel I)

$$I) \quad Q = Erweichungspunkt \; [°C] / Zentrifugenmittelwert \; Mz \; [g/mol],$$

also Q gleich Erweichungspunkt geteilt durch Zentrifugenmittelwert,
aus, so beträgt Q 0,015 [°C·mol/g] bis 0,050 [°C·mol/g], bevorzugt 0,020 [°C·mol/g] bis 0,040 [°C·mol/g], besonders bevorzugt 0,020 [°C·mol/g] bis 0,035 [°C·mol/g], ganz besonders bevorzugt 0,022[°C·mol/g] bis 0,030 [°C·mol/g] und wiederum ganz besonders bevorzugt 0,024[°C·mol/g] bis 0,028 ["C·mol/g] .

Es hat sich herausgestellt, dass mit einem Kohlenwasserstoffharz, welches diese Bedingungen erfüllt, im Vergleich zum Stand der Technik, eine überraschend gute Verbesserung der Kautschukmischung hinsichtlich des Zielkonfliktes aus Rollwiderstandsverhalten und Nassgriffeigenschaften erzielt wird. Überraschenderweise gelingt diese Verbesserung auch bei sehr hohen Mengen des Kohlenwasserstoffharzes von 25 phr oder mehr, bevorzugt 30 phr oder mehr, besonders bevorzugt 36 phr oder mehr, ganz besonders bevorzugt 36 bis 100 phr, wiederum ganz besonders bevorzugt 40 bis 100 phr, wiederum ganz besonders bevorzugt 45 bis 100 phr, wiederum ganz besonders bevorzugt 45 bis 75 phr. Dies könnte u.a. durch eine überraschend gute Löslichkeit des Kohlenwasserstoffharzes in dem natürlichen und/oder synthetischen Polyisopren, bevorzugt in natürlichem, Polyisopren, erklärt werden.

Besonders bevorzugt weist das Kohlenwasserstoffharz hierbei einen Erweichungspunkt von 80 bis 99 °C, wiederum besonders bevorzugt von 85 bis 99°C, wiederum weiter besonders bevorzugt von 90 bis 99 °C auf.

Bevorzugt weist das Kohlenwasserstoffharz hierbei einen Zentrifugenmittelwert Mz von 2500 bis 10000 g/mol, besonders bevorzugt von 2500 bis 5000 g/mol, wiederum besonders bevorzugt von 3000 bis 4500 g/mol, wiederum weiter besonders bevorzugt von 3200 bis 4300 g/mol auf, wiederum ganz besonders bevorzugt von 3400 bis 4100 g/mol, auf.

Derartige Kohlenwasserstoffharze sind z.B. unter den Handelsnamen Piccotac™ 1095 (Erweichungspunkt = 94 °C, Zentrifugenmittelwert Mz = 3500 g/mol, Q = 0,0269 [°C·mol/g]) oder Piccotac™ 6095-E (Erweichungspunkt = 98 °C, Zentrifugenmittelwert Mz = 4000 g/mol, Q = 0,0245 [°C·mol/g]) der Firma Eastman Chemical Company erhältlich.

Die erfindungsgemäße Kautschukmischung enthält wie oben ausgeführt 40 bis 100 phr wenigstens eines natürlichen und/oder synthetischen Polyisoprens. Somit enthält die erfindungsgemäße Kautschukmischung, wenn sie weniger als 100 phr Polyisopren enthält, wenigstens einen weiteren Kautschuk in Mengen von 0 bis 60 phr, bevorzugt 0 bis 50 phr, besonders bevorzugt 0 bis 40 phr, ganz besonders bevorzugt 0 bis 30 phr, wiederum ganz besonders bevorzugt 0 bis 20 phr, wenigstens aber 0,1 phr.

Der wenigstens eine weitere Kautschuk ist dabei ausgewählt aus der Gruppe, bestehend aus Butadien-Kautschuk und/oder lösungspolymerisiertem Styrol-Butadien-Kautschuk und/oder emulsionspolymerisiertem Styrol-Butadien-Kautschuk und/oder Flüssigkautschuken mit einem Molekulargewicht Mw von größer als 25000 20000 g/mol und/oder Halobutylkautschuk und/oder Polynorbornen und/oder Isopren-Isobutylen-Copolymer und/oder Ethy-len-Propylen-Dien-Kautschuk und/oder Nitrilkautschuk und/oder Chloroprenkautschuk und/oder Acrylat-Kautschuk und/oder Fluorkautschuk und/oder Silikon-Kautschuk und/oder Polysulfidkautschuk und/oder Epichlorhydrinkautschuk und/oder Styrol-Isopren-Butadien-Terpolymer und/oder hydrierter Acrylnitrilbutadienkautschuk und/oder Isopren-Butadien-Copolymer und/oder hydrierter Styrol-Butadien-Kautschuk, wobei die Kautschuke modifiziert sein können. Bei der Modifizierung kann es sich um solche mit Hydroxy-Gruppen und/oder EthoxyGruppen und/oder Epoxy-Gruppen und/oder Siloxan-Gruppen und/oder Amino-Gruppen und/oder Aminosiloxan und/oder Carboxy-Gruppen und/oder Phthalocyanin-Gruppen und/oder Silan-Sulfid-Gruppen handeln. Es kommen aber auch weitere, der fachkundigen Person bekannte, Modifizierungen, auch als Funktionalisierungen bezeichnet, in Frage. Bestandteil solcher Funktionalisierungen können Metallatome sein.

Insbesondere Nitrilkautschuk, hydrierter Acrylnitrilbutadienkautschuk, Chloroprenkautschuk, Butyl-Kautschuk, Halobutylkautschuk oder Ethylen-Propylen-Dien-Kautschuk kommen bei der Herstellung von technischen Gummiartikeln, wie Gurte, Riemen und Schläuche, zum Einsatz.

Besonders bevorzugt ist der weitere Kautschuk ein Dienkautschuk und ausgewählt aus der Gruppe bestehend aus Butadien-Kautschuk und Styrol-Butadien-Kautschuk.

Bei dem Butadien-Kautschuk (= BR, Polybutadien) kann es sich um alle dem Fachmann bekannten Typen handeln. Darunter fallen u.a. die sogenannten high-cis- und low-cis-Typen, wobei Polybutadien mit einem cis-Anteil größer oder gleich 90 Gew.-% als high-cis-Typ und Polybutadien mit einem cis-Anteil kleiner als 90 Gew.-% als low-cis-Typ bezeichnet wird. Ein low-cis-Polybutadien ist z.B. Li-BR (Lithium-katalysierter Butadien-Kautschuk) mit einem cis-Anteil von 20 bis 50 Gew.-%. Mit einem high-cis BR werden besonders gute Abriebeigenschaften der Kautschukmischung erzielt.

Das eingesetzte Polybutadien kann wie oben beschrieben endgruppenmodifiziert sein.

Die erfindungsgemäße Kautschukmischung enthält zudem, insbesondere für die Anwendung im Fahrzeugluftreifen, bevorzugt 10 bis 300 phr, bevorzugt 30 bis 300 phr, besonders bevorzugt 30 bis 150 phr, zumindest eines Füllstoffs. Hierbei kann es sich um alle dem Fachmann bekannten Füllstoffe handeln, wie Kieselsäure, Alumosilicate, Ruß, Kohlenstoffnanoröhrchen, Kreide, Stärke, Magnesiumoxid, Titandioxid oder Kautschukgele. Erfindungsgemäß enthält die Kautschukmischung 10 bis 300 phr wenigstens einer Kieselsäure.

Bevorzugt enthält die Kautschukmischung wenigstens eine Kieselsäure oder wenigstens eine Kieselsäure und wenigstens einen Ruß als Füllstoff.

Dabei sind alle dem Fachmann bekannten Ruß-Typen denkbar. Bevorzugt wird jedoch ein Ruß eingesetzt, der eine Jodadsorptionszahl gemäß ASTM D 1510 von 30 bis 180 g/kg, bevorzugt 40 bis 180 g/kg, besonders bevorzugt 40 bis 130 kg/g, und eine DBP-Zahl gemäß ASTM D 2414 von 80 bis 200 ml/100 g, bevorzugt 100 bis 200 ml/100g, besonders bevorzugt 100 bis 180 ml/100g, aufweist.

Hiermit werden für die Anwendung im Fahrzeugreifen besonders gute Rollwiderstandsindikatoren (Rückprallelastizität bei 70 °C) und Abrieb- und/oder Reißeigenschaften erzielt.

Bei den Kieselsäuren kann es sich um die dem Fachmann bekannten Kieselsäuren, die als Füllstoff für Reifenkautschukmischungen geeignet sind, handeln. Besonders bevorzugt ist es allerdings, wenn eine fein verteilte, gefällte Kieselsäure verwendet wird, die eine Stickstoff-Oberfläche (BET-Oberfläche) (gemäß DIN ISO 9277 und DIN 66132) von 35 bis 350 $m^2$/g, bevorzugt von 35 bis 260 $m^2$/g, besonders bevorzugt von 100 bis 260 $m^2$/g und ganz besonders bevorzugt von 115 bis 235 $m^2$/g, und eine CTAB-Oberfläche (gemäß ASTM D 3765) von 30 bis 400 $m^2$/g, bevorzugt von 30 bis 250 $m^2$/g, besonders bevorzugt von 100 bis 250 $m^2$/g und ganz besonders bevorzugt von 110 bis 230 $m^2$/g, aufweist. Derartige Kieselsäuren führen z. B. in Kautschukmischungen für Reifenlaufstreifen zu besonders guten physikalischen Eigenschaften der Vulkanisate. Außerdem können sich dabei Vorteile in der Mischungsverarbeitung durch eine Verringerung der Mischzeit bei gleichbleibenden Produkteigenschaften ergeben, die zu einer verbesserten Produktivität führen. Als Kieselsäuren können somit z. B. sowohl jene des Typs Ultrasil® VN3 (Handelsname) der Firma Evonik als auch hoch dispergierbare Kieselsäuren, so genannte HD-Kieselsäuren (z.B. Zeosil® 1165 MP der Firma Rhodia), zum Einsatz kommen.

Zur Verbesserung der Verarbeitbarkeit und zur Anbindung der Kieselsäure und anderer ggf. vorhandener polarer Füllstoffe an den Dienkautschuk können Silan-Kupplungsagenzien in Kautschukmischungen eingesetzt werden. Hierbei können ein oder mehrere verschiedene Silan-Kupplungsagenzien in Kombination miteinander eingesetzt werden. Die Kautschukmischung kann somit ein Gemisch verschiedener Silane enthalten.

Die Silan-Kupplungsagenzien reagieren mit den oberflächlichen Silanolgruppen der Kieselsäure oder anderen polaren Gruppen während des Mischens des Kautschuks bzw. der Kautschukmischung (in situ) oder bereits vor der Zugabe des Füllstoffes zum Kautschuk im Sinne einer Vorbehandlung (Vormodifizierung). Als Silan-Kupplungsagenzien können dabei alle dem Fachmann für die Verwendung in Kautschukmischungen bekannten Si-lan-Kupplungsagenzien verwendet werden. Solche aus dem Stand der Technik bekannten Kupplungsagenzien sind bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers eingehen kann. Bei der letztgenannten Gruppe kann es sich z. B. um die folgenden chemischen Gruppen handeln:

-SCN, -SH, -NH2 oder -Sx- (mit x = 2 bis 8).

So können als Silan-Kupplungsagenzien z. B. 3-Mercaptopropyltriethoxysilan, 3 Thiocyanatopropyltrimethoxysilan oder 3,3'-Bis(triethoxysilylpropyl)polysulfide mit 2 bis 8 Schwefelatomen, wie z. B. 3,3'-Bis(triethoxysilylpropyl)tetrasulfid (TESPT), das entsprechende Disulfid (TESPD) oder auch Gemische aus den Sulfiden mit 1 bis 8 Schwefelatomen mit unterschiedlichen Gehalten an den verschiedenen Sulfiden, verwendet werden. TESPT kann dabei beispielsweise auch als Gemisch mit Industrieruß (Handelsname X50S® der Firma Evonik) zugesetzt werden.

Bevorzugt wird ein Silan-Gemisch eingesetzt, welches zu 40 bis 100 Gew.-% Disulfide, besonders bevorzugt 55 bis 85 Gew.-% Disulfide und ganz besonders bevorzugt 60 bis 80 Gew.-% Disulfide enthält. Ein solches Gemisch ist z.B. unter dem Handelsnamen Si 261® der Firma Evonik erhältlich, welches z.B. in der DE 102006004062 A1 beschrieben ist. Auch geblockte Mercaptosilane, wie sie z. B. aus der WO 99/09036 bekannt sind, können als Silan-Kupplungsagens eingesetzt werden. Auch Silane, wie sie in der WO 2008/083241 A1, der WO 2008/083242 A1, der WO 2008/083243 A1 und der WO 2008/083244 A1 beschrieben sind, können eingesetzt werden. Verwendbar sind z. B. Silane, die unter dem Namen NXT in verschiedenen Varianten von der Firma Momentive, USA, oder solche, die unter dem Namen VP Si 363® von der Firma Evonik Industries vertrieben werden.

Gemäß einer bevorzugten Ausführungsform der Erfindung ist Kieselsäure als alleiniger oder Hauptfüllstoff enthalten, das heißt, dass die Kieselsäuremenge deutlich größer ist als die Menge an ggf. anderen enthaltenen Füllstoffen. Mit Kieselsäure als alleinigem Füllstoff oder Hauptfüllstoff werden in der erfindungsgemäßen Kautschukmischung, insbesondere für die Anwendung im Laufstreifen von Fahrzeugluftreifen, besonders gute Rollwiderstandsindikatoren erzielt, wobei die sonstigen Reifeneigenschaften wie Nassbremsen und/oder Abriebverhalten und/oder Handling-Verhalten und/oder die Reißeigenschaften auf einem guten Niveau liegen oder sogar verbessert werden. Die Menge an Kieselsäure beträgt hierbei 10 bis 300 phr, bevorzugt 50 bis 250 phr, besonders bevorzugt 50 bis 180 phr, ganz besonders bevorzugt 50 bis 150 phr, wiederum ganz besonders bevorzugt 50 bis 130 phr. Hierbei ist es denkbar, dass die Kautschukmischung zudem 0,1 bis 30 phr, bevorzugt 2 bis 30 phr, besonders bevorzugt 2 bis 10 phr wenigstens eines Rußes enthält.

Gemäß einer bevorzugten Ausführungsform der Erfindung enthält die Kautschukmischung 50 bis 70 phr wenigstens einer Kieselsäure.

Gemäß einer weiteren bevorzugten Ausführungsform der Erfindung enthält die Kautschukmischung 105 bis 135 phr wenigstens einer Kieselsäure.

Gemäß einer weiteren bevorzugten Ausführungsform der Erfindung ist Ruß als Hauptfüllstoff enthalten, das heißt, dass die Rußmenge deutlich größer ist als die Menge an ggf. anderen enthaltenen Füllstoffen. Mit Ruß als Hauptfüllstoff werden in der erfindungsgemäßen Kautschukmischung, insbesondere für die Anwendung im Laufstreifen von Fahrzeugluftreifen, ein besonders guter Abriebwiderstand erzielt, wobei die sonstigen Reifeneigenschaften wie Nassbremsen und/oder Rollwiderstandsverhalten und/oder Handling-verhalten und/oder die Reißeigenschaften auf einem guten Niveau liegen oder sogar verbessert werden. Die Menge an Ruß beträgt hierbei 10 bis 300 phr, bevorzugt 50 bis 250 phr, besonders bevorzugt 50 bis 180 phr, ganz besonders bevorzugt 50 bis 150 phr, wiederum ganz besonders bevorzugt 50 bis 130 phr.

Somit ist es auch denkbar, dass die erfindungsgemäße Kautschukmischung Ruß und Kieselsäure in ähnlichen Mengen enthält, wie z.B. 20 bis 100 phr Ruß in Kombination mit 20 bis 100 phr Kieselsäure.

Es ist aber auch denkbar, dass die Kautschukmischung neben Ruß als Hauptfüllstoff zudem 10 bis 30 phr, wenigstens einer Kieselsäure enthält.

Es können in der Kautschukmischung noch 0 bis 70 phr, bevorzugt 0,1 bis 60 phr, bevorzugt 0,1 bis 50 phr, zumindest eines Weichmachers vorhanden sein. Hierzu gehören alle dem Fachmann bekannten Weichmacher wie aromatische, naphthenische oder paraffinische Mineralölweichmacher, wie z.B. MES (mild extraction solvate) oder TDAE (treated distillate aromatic extract) oder naphthenische Prozessöle durch Hydrierung wie bspw. in EP 2357219 A1 beschrieben, oder Rubber-to-Liquid-Öle (RTL) oder Biomass-to-Liquid-Öle (BTL) oder Faktisse oder Weichmacherharze oder Flüssig-Polymere (wie Flüssig-BR), deren mittleres Molekulargewicht Mw (Bestimmung per GPC = gel permeation chromatography, in Anlehnung an BS ISO 11344:2004) zwischen 500 und 20000 g/mol liegt. Werden in der erfindungsgemäßen Kautschukmischung Flüssig-Polymere als Weichmacher eingesetzt, so gehen diese nicht als Kautschuk in die Berechnung der Zusammensetzung der Polymermatrix ein.

Bei der Verwendung von Mineralöl ist dieses bevorzugt ausgewählt aus der Gruppe, bestehend aus DAE (Destillated Aromatic Extracts) und/oder RAE (Residual Aromatic Extract) und/oder TDAE (Treated Destillated Aromatic Extracts) und/oder MES (Mild Extracted Solvents) und/oder naphthenische Öle.

Des Weiteren kann die erfindungsgemäße Kautschukmischung übliche Zusatzstoffe in üblichen Gewichtsteilen enthalten. Zu diesen Zusatzstoffen zählen

a) Alterungsschutzmittel, wie z. B.

N-Phenyl-N'-(1,3-dimethylbutyl)-p-phenylendiamin (6PPD),
N,N'-Diphenyl-p-phenylendiamin (DPPD),
N,N'-Ditolyl-p-phenylendiamin (DTPD),
N-Isopropyl-N'-phenyl-p-phenylendiamin (IPPD),
2,2,4-Trimethyl-1,2-dihydrochinolin (TMQ),

b) Aktivatoren, wie z. B. Zinkoxid und Fettsäuren (z. B. Stearinsäure),
c) Wachse,
d) weitere Harze, insbesondere Klebharze, die nicht unter die oben genannten aromatischen Kohlenwasserstoffharze fallen,
e) Mastikationshilfsmittel, wie z. B.
2,2'-Dibenzamidodiphenyldisulfid (DBD) und
f) Verarbeitungshilfsmittel, wie z.B. Fettsäuresalze, wie z.B. Zinkseifen, und Fettsäureester und deren Derivate .

Insbesondere bei der Verwendung der erfindungsgemäßen Kautschukmischung für die inneren Bauteile eines Reifens oder eines technischen Gummiartikels, welche direkten Kontakt zu vorhandenen Festigkeitsträgern haben, wird der Kautschukmischung in der Regel noch ein geeignetes Haftsystem, oft in Form von Klebharzen, zugefügt.

Der Mengenanteil der Gesamtmenge an weiteren Zusatzstoffen beträgt 3 bis 150 phr, bevorzugt 3 bis 100 phr und besonders bevorzugt 5 bis 80 phr.

Im Gesamtmengenanteil der weiteren Zusatzstoffe finden sich noch 0,1 bis 10 phr, bevorzugt 0,2 bis 8 phr, besonders bevorzugt 0,2 bis 4 phr, Zinkoxid (ZnO).

Hierbei kann es sich um alle dem Fachmann bekannten Typen an Zinkoxid handeln, wie z.B. ZnO-Granulat oder -Pulver. Das herkömmlicherweise verwendete Zinkoxid weist in der Regel eine BET-Oberfläche von weniger als 10 m$^2$/g auf. Es kann aber auch so genanntes nano-Zinkoxid mit einer BET-Oberfläche von 10 bis 60 m$^2$/g verwendet werden.

Die Vulkanisation wird in Anwesenheit von Schwefel oder Schwefelspendern mit Hilfe von Vulkanisationsbeschleunigern durchgeführt, wobei einige Vulkanisationsbeschleuniger zugleich als Schwefelspender wirken können. Schwefel oder Schwefelspender sowie ein oder mehrere Beschleuniger werden im letzten Mischungsschritt in den genannten Mengen der Kautschukmischung zugesetzt. Dabei ist der Beschleuniger ausgewählt aus der Gruppe bestehend aus Thiazolbeschleunigern und/oder

Mercaptobeschleunigern und/oder Sulfenamidbeschleunigern und/oder Thiocarbamatbeschleunigern und/oder Thiurambeschleunigern und/oder Thiophosphatbeschleunigern und/oder Thioharnstoffbeschleunigern und/oder Xanthogenat-Beschleunigern und/oder Guanidin-Beschleunigern. Bevorzugt ist die Verwendung eines Sulfenamidbeschleunigers, der ausgewählt ist aus der Gruppe bestehend aus N-Cyclohexyl-2-benzothiazolsufenamid (CBS) und/oder N,N-Dicyclohexylbenzothiazol-2-sulfenamid (DCBS) und/oder Benzothiazyl-2-sulfenmorpholid (MBS) und/oder N-tert.Butyl-2-benzothiazylsulfenamid (TBBS).

In einer bevorzugten Ausführungsform der Erfindung enthält die Kautschukmischung CBS als Beschleuniger. Hierdurch werden besonders gute Reißeigenschaften der Kautschukmischung erzielt.

Auch weitere netzwerkbildende Systeme, wie sie beispielsweise unter den Handelsnamen Vulkuren®, Duralink® oder Perkalink® erhältlich sind, oder netzwerkbildende Systeme, wie sie in der WO 2010/049261 A2 beschrieben sind, können in der Kautschukmischung eingesetzt werden. Dieses System enthält ein Vulkanisationsmittel, welches mit einer Funktionalität größer vier vernetzt und zumindest einen Vulkanisationsbeschleuniger. Das Vulkanisationsmittel, welches mit einer Funktionalität von größer vier vernetzt hat beispielsweise die allgemeine Formel A):

$$\text{A)} \qquad G[C_aH_{2a}\text{-}CH_2\text{-}S_bY]_c$$

wobei G eine polyvalente cyclische Kohlenwasserstoffgruppe und/oder eine polyvalente Heterokohlenwasserstoffgruppe und/oder eine polyvalente Siloxangruppe ist, die 1 bis 100 Atome enthält; wobei jedes Y unabhängig ausgewählt aus einer kautschukaktiven Gruppe, Schwefel-enthaltende Funktionalitäten enthält; und wobei a, b und c ganze Zahlen sind, für die unabhängig gilt: a gleich 0 bis 6; b gleich 0 bis 8; und c gleich 3 bis 5.

Die kautschukaktive Gruppe ist bevorzugt ausgewählt ist aus einer Thiosulfonatgruppe, einer Dithiocarbamatgruppe, einer Thiocarbonylgruppe, einer Mercaptogruppe, einer Kohlenwasserstoffgruppe und einer Natriumthiosulfonatgruppe (Bunte-Salzgruppe) .

Hiermit werden sehr gute Abrieb- und Reißeigenschaften der erfindungsgemäßen Kautschukmischung erzielt.

Außerdem können in der Kautschukmischung Vulkanisationsverzögerer vorhanden sein.

Eine weitere Aufgabe der vorliegenden Erfindung besteht darin, einen Fahrzeugluftreifen bereitzustellen, der sich ausgehend vom Stand der Technik durch eine weitere Verbesserung im Zielkonflikt Rollwiderstandsverhalten versus Nassgriffeigenschaften auszeichnet. Gelöst wird diese Aufgabe dadurch, dass der Fahrzeugluftreifen in wenigstens einem Bauteil die erfindungsgemäße Kautschukmischung wie oben beschrieben enthält. Dabei gelten alle oben genannten Ausführungen zu den Bestandteilen und deren Merkmale.

Bevorzugt handelt es sich bei dem Bauteil um einen Laufstreifen. Wie dem Fachmann bekannt ist, trägt der Laufstreifen zu einem relativ hohen Anteil zum Gesamtrollwiderstand des Reifens bei. Zudem hängt die Sicherheit des Fahrzeugluftreifens im Fahrbetrieb wesentlich von den Nassgriffeigenschaften, insbesondere dem Nassbremsverhalten, des Laufstreifens ab.

Es ist aber zudem auch denkbar, dass der Fahrzeugluftreifen die Kautschukmischung in wenigstens einem anderen äußeren und/oder inneren Bauteil, einem sogenannten Body-Bauteil, enthält, wie der Seitenwand, Innenseele (Innenschicht), Squeegee, Kernprofil, Gürtel, Schulter, Gürtelprofil, Karkasse, Wulstverstärker, Wulstprofil, Hornprofil und Bandage.

Die Herstellung der erfindungsgemäßen Kautschukmischung erfolgt nach dem in der Kautschukindustrie üblichen Verfahren, bei dem zunächst in ein oder mehreren Mischstufen eine Grundmischung mit allen Bestandteilen außer dem Vulkanisationssystem (Schwefel und vulkanisationsbeeinflussende Substanzen) hergestellt wird. Durch Zugabe des Vulkanisationssystems in einer letzten Mischstufe wird die Fertigmischung erzeugt. Die Fertigmischung wird z.B. durch einen Extrusionsvorgang weiterverarbeitet und in die entsprechende Form gebracht.

Zur Verwendung in Fahrzeugluftreifen wird die Mischung bevorzugt in die Form eines Laufstreifens gebracht und bei der Herstellung des Fahrzeugreifenrohlings wie bekannt aufgebracht. Der Laufstreifen kann aber auch in Form eines schmalen Kautschukmischungsstreifens auf einen Reifenrohling aufgewickelt werden. Bei zweigeteilten Laufstreifen (oberer Teil: Cap und unterer Teil: Base) kann die erfindungsgemäße Kautschukmischung sowohl für die Cap als auch für die Base verwendet werden. Die Herstellung der erfindungsgemäßen Kautschukmischung zur Verwendung als Body-Mischung in Fahrzeugluftreifen erfolgt wie bereits für den Laufstreifen beschrieben. Der Unterschied liegt in der Formgebung nach dem Extrusionsvorgang. Die so erhaltenen Formen der erfindungsgemäßen Kautschukmischung für eine oder mehrere unterschiedliche Body-Mischungen dienen dann dem Aufbau eines Reifenrohlings.

Die Erfindung soll nun anhand von Vergleichs- und Ausführungsbeispielen, die in der Tabelle 1 zusammengefasst sind, näher erläutert werden.

Die Vergleichsmischungen sind mit V, die erfindungsgemäßen Mischungen sind mit E gekennzeichnet.

Die Mischungsherstellung erfolgte unter üblichen Bedingungen in drei Stufen in einem Labortangentialmischer. Aus sämtlichen Mischungen wurden Prüfkörper durch optimale Vulkanisation unter Druck bei 160 °C hergestellt und mit diesen Prüfkörpern für die Kautschukindustrie typische Materialeigenschaften mit den im Folgenden angegebenen Testverfahren ermittelt.

- Rückprallelastizität bei RT und 70 °C gemäß DIN 53 512
- Zugfestigkeit und Reißdehnung bei Raumtemperatur gemäß DIN 53 504
- dynamischer Speichermodul E' bei 8 % Dehnung und maximaler Verlustfaktor tan $\delta$ (tangens delta) bei 55 °C aus dehnungsabhängiger Messung ("Strain-Sweep") in Anlehnung an DIN 53513
- Abrieb bei Raumtemperatur gemäß DIN53 516 bzw. DIN/ISO 4649
- Glasübergangstemperatur $T_g$ der Kautschukmischung mittels DSC gemäß ISO 11357-1 und 11357-21987 S. 519-527 (Kalibrierte DSC mit Tieftemperatureinrichtung, Kalibrierung nach Gerätetyp und Herstellerangaben, Probe im Aluminiumtiegel mit Aluminiumdeckel)

Tabelle 1

| Bestandteile | Ein h. | V1 | V2 | V3 | V4 | V5 | E1 | E2 | E3 | V6 | E4 | E5 | E6 |
|---|---|---|---|---|---|---|---|---|---|---|---|---|---|
| NR [a] | phr | 100 | 100 | 100 | 100 | 100 | 100 | 100 | 100 | 100 | 100 | 100 | 100 |
| Kieselsäure [b] | phr | 60 | 60 | 60 | 60 | 60 | 60 | 60 | 60 | 60 | 60 | 60 | 60 |
| KW-Harz [c] | phr | - | - | - | - | 10 | 30 | 50 | 70 | - | - | - | - |
| KW-Harz [d] | phr | - | - | - | - | - | - | - | - | 10 | 30 | 50 | 70 |
| $C_5$-Harz [e] | phr | - | 10 | 30 | 50 | - | - | - | - | - | - | - | - |
| Alterungs. [f] | phr | 4 | 4 | 4 | 4 | 4 | 4 | 4 | 4 | 4 | 4 | 4 | 4 |
| Stearinsäure | phr | 2,5 | 2,5 | 2,5 | 2,5 | 2,5 | 2,5 | 2,5 | 2,5 | 2,5 | 2,5 | 2,5 | 2,5 |
| ZnO | phr | 2,5 | 2,5 | 2,5 | 2,5 | 2,5 | 2,5 | 2,5 | 2,5 | 2,5 | 2,5 | 2,5 | 2,5 |
| Silan [9] | phr | 4,3 | 4,3 | 4,3 | 4,3 | 4,3 | 4,3 | 4,3 | 4,3 | 4,3 | 4,3 | 4,3 | 4,3 |
| Beschl. [h] | phr | 4 | 4 | 4 | 4 | 4 | 4 | 4 | 4 | 4 | 4 | 4 | 4 |
| Schwefel | phr | 2 | 2 | 2 | 2 | 2 | 2 | 2 | 2 | 2 | 2 | 2 | 2 |
| | | | | | | | | | | | | | |
| Eigenschaften | | | | | | | | | | | | | |
| Rückpr. RT | % | 50 | 46 | 38 | 26 | 47 | 40 | 27 | 16 | 46 | 35 | 22 | 12 |
| Rückpr. 70 °C | % | 62 | 61 | 60 | 57 | 63 | 64 | 60 | 56 | 61 | 62 | 56 | 53 |
| Diff. Rückpr. | | 12 | 15 | 22 | 31 | 16 | 23 | 33 | 41 | 14 | 27 | 34 | 41 |
| Zugfestigkeit | MPa | 27 | 26 | 22 | 17 | 24 | 23 | 19 | 13 | 25 | 23 | 19 | 14 |
| Reißdehnung | % | 566 | 611 | 651 | 653 | 588 | 681 | 707 | 651 | 593 | 674 | 722 | 686 |
| DIN Abrieb | mm$^3$ | 140 | 144 | 185 | 360 | 145 | 177 | 360 | 630 | 161 | 176 | 328 | 555 |
| E' (8 %) | MPa | 6,5 | 5,2 | 3,6 | 2,7 | 4,9 | 3,5 | 2,5 | 1,3 | 5,1 | 3,6 | 2,2 | 1,7 |

(fortgesetzt)

| Bestandteile | Ein h. | V1 | V2 | V3 | V4 | V5 | E1 | E2 | E3 | V6 | E4 | E5 | E6 |
|---|---|---|---|---|---|---|---|---|---|---|---|---|---|
| $T_g$ | °C | -61 | -59 | -57 | -55 | -59 | -56 | -54 | -51 | -58 | -55 | -51 | -48 |

Verwendete Substanzen:

a) NR: Naturkautschuk, TSR

b) Kieselsäure: VN3, Fa. Evonik

c) Kohlenwasserstoffharz : Piccotac™ 1095, Firma Eastman Chemical Company, aliphatisches C5-Kohlenwasserstoffharz, 0 Gew.-% aromatische Monomere
Mw = 1700 g/mol, Mz = 3500 g/mol; EP = 94 °C; Q = 0,0269 [°C·mol/g]

d) Kohlenwasserstoffharz: Piccotac™ 6095-E, Firma Eastman Chemical Company, 60 Gew.-% aliphatische $C_5$-Mo-nomere, 40 Gew.-% aromatische Monomere; Mw = 1700 g/mol, Mz = 4000 g/mol; EP = 98 °C; Q = 0,0245 [°C·mol/g]

e) C5-Harz: Escorez™ 1102, Fa. Exxon Mobil Chemical, 100 Gew.-% aliphatische $C_5$-Monomere; Mw = 4500 g/mol Mz = 15000 g/mol, EP = 100 °C; Q = 0,00667

f) Alterungsschutzmittel: 6PPD + Ozonschutzwachs

g) Silan: 75 Gew.-% S2, TESPD

h) Beschleuniger: DPG und CBS

Wie aus Tabelle 1 erkennbar ist, weisen die erfindungsgemäßen Kautschukmischungen E1 bis E6 im Vergleich zu der Referenzmischung V1 und den Vergleichsmischungen V3 und V4 mit einem Kohlenwasserstoffharz welches einen niedrigeren Quotienten Q (Erweichungspunkt [°C]/ Zentrifugenmittelwert Mz [g/mol]) aufweist, ein höheres Leistungsniveau hinsichtlich des Zielkonfliktes aus Rollwiderstandsverhalten und Nassgriffeigenschaften auf, was an der erhöhten Differenz der Rückprallelastizitäten (Rückprallelastizität bei 70 °C minus Rückprallelastizität bei RT) erkennbar ist. Je kleiner der Wert für die Rückprallelastizität bei Raumtemperatur ist, desto besser das Nassgriffverhalten. Je größer die Rückprallelastizität bei 70 °C ist, desto besser ist das Rollwiderstandsverhalten der Kautschukmischung. Zudem zeigt der Vergleich der erfindungsgemäßen Kautschukmischungen E1 und E2 bzw. E4 und E5 mit V3 und V4, also den Vergleichsbeispielen mit jeweils gleicher Harzmenge, dass die Reißdehnung verbessert wurde bei gleichem oder verbesserten Abriebverhalten.

Weiterhin ist in Tabelle 1 erkennbar, dass die Kohlenwasserstoffharze, wie in den erfindungsgemäßen Varianten in hohen Mengen verwendet, s. insbesondere E2, E3 bzw. E5 und E6, gegenüber dem Vergleichsharz eine stärkere Verschiebung der Glasübergangstemperatur der Kautschukmischung ausgehend von der Glasübergangstemperatur von Naturkautschuk (s. V1) bewirken. Dies deutet auf eine überraschend gute Löslichkeit der Kohlenwasserstoffharze gemäß Anspruch 1 in Naturkautschuk hin.

**Patentansprüche**

1. Schwefelvernetzbare Kautschukmischung, **dadurch gekennzeichnet, dass** sie wenigstens folgende Bestandteile enthält:

   - 40 bis 100 phr wenigstens eines natürlichen und/oder synthetischen Polyisoprens und

   - 15 phr oder mehr wenigstens eines Kohlenwasserstoffharzes, welches zu 50 bis 100 Gew.-% aus aliphatischen $C_5$-Monomeren und zu 0 bis 50 Gew.-% aus weiteren Monomeren aufgebaut ist, wobei das Kohlenwasserstoffharz gemäß Formel I) ein Q von 0,015 [°C·mol/g] bis 0,050 [°C·mol/g] aufweist:

   I) Q = Erweichungspunkt [°C]/ Sentrifugenmittelwert Mz [g/mol], und wobei das Kohlenwasserstoffharz einen Erweichungspunkt gemäß ASTM E 28 (Ring und Ball) von 60 bis 200 °C aufweist; und

   - 10 bis 300 phr wenigstens einer Kieselsäure.

2. Schwefelvernetzbare Kautschukmischung nach Anspruch 1, **dadurch gekennzeichnet, dass** sie 15 bis 300 phr des Kohlenwasserstoffharzes enthält.

3. Schwefelvernetzbare Kautschukmischung nach einem der vorherigen Ansprüche, **dadurch gekennzeichnet, dass** das sie 36 bis 100 phr des Kohlenwasserstoffharzes enthält.

4. Schwefelvernetzbare Kautschukmischung nach einem der vorherigen Ansprüche, **dadurch gekennzeichnet, dass** das oder die weitere(n) Monomer(e) ausgewählt ist oder sind aus der Gruppe ungesättigter Verbindungen, die kationisch polymerisiert werden können, enthaltend Aromaten und/oder ungesättigte Terpene und/oder Alkene und/oder Cycloalkene.

5. Schwefelvernetzbare Kautschukmischung nach Anspruch 4, **dadurch gekennzeichnet, dass** das oder die weitere(n) Monomer(e) ausgewählt ist oder sind aus der Gruppe bestehend aus alpha-Methylstyrol und/oder Styrol und/oder Vinyltoluol und/oder Inden und/oder Cumaron und/oder Methylinden und/oder Methylcumaron und/oder Phenol und/oder Olefinen.

6. Schwefelvernetzbare Kautschukmischung nach einem der vorherigen Ansprüche, **dadurch gekennzeichnet, dass** das Kohlenwasserstoffharz einen Erweichungspunkt gemäß ASTM E 28 (Ring und Ball) von 60 bis 99 °C aufweist.

7. Schwefelvernetzbare Kautschukmischung nach einem der vorherigen Ansprüche, **dadurch gekennzeichnet, dass** das Kohlenwasserstoffharz ein Molekulargewicht Mw (Gewichtsmittel) von 500 bis 4000 g/mol und ein Zentrifugenmittelwert Mz von 2500 bis 10000 g/mol aufweist, wobei die Bestimmung des Molekulargewichtes (Gewichtsmittel Mw und Zentrifugenmittelwert Mz) mittels Gelpermeationschromatographie gemäß DIN 55672-1 erfolgt.

8. Fahrzeugluftreifen, **dadurch gekennzeichnet, dass** er in wenigstens einem Bauteil wenigstens eine Kautschukmischung enthält, die wenigstens folgende Bestandteile enthält:

   - 40 bis 100 phr wenigstens eines natürlichen und/oder synthetischen Polyisoprens und
   - 15 phr oder mehr wenigstens eines Kohlenwasserstoffharzes, welches zu 50 bis 100 Gew.-% aus aliphatischen $C_5$-Monomeren und zu 0 bis 50 Gew.-% aus weiteren Monomeren aufgebaut ist, wobei das Kohlenwasserstoffharz gemäß Formel I) ein Q von 0,015 [°C·mol/g] bis 0,050 [°C·mol/g] aufweist:

   I) Q = Erweichungspunkt [°C]/ Zentrifugenmittelwert Mz [g/mol], und wobei das Kohlenwasserstoffharz einen Erweichungspunkt gemäß ASTM E 28 (Ring und Ball) von 60 bis 200 °C aufweist.

9. Fahrzeugluftreifen nach Anspruch 8, **dadurch gekennzeichnet, dass** es sich bei dem Bauteil wenigstens um den Laufstreifen handelt.

**Claims**

1. Sulfur-crosslinkable rubber mixture, **characterized in that** it comprises at least the following constituents:

   - from 40 to 100 phr of at least one natural and/or synthetic polyisoprene and
   - 15 phr or more of at least one hydrocarbon resin which is composed of from 50 to 100% by weight of aliphatic $C_5$ monomers and of from 0 to 50% by weight of other monomers, where the Q value of the hydrocarbon resin according to formula I) is from 0.015 [°C•mol/gl to 0.050 [°C•mol/g] :

   I) Q = softening point [°C]/z-average Mz [g/mol], and where the softening point of the hydrocarbon resin in accordance with ASTM E28 (ring and ball) is from 60 to 200°C; and

   - from 10 to 300 phr of at least one silica.

2. Sulfur-crosslinkable rubber mixture according to Claim 1, **characterized in that** it comprises from 15 to 300 phr of the hydrocarbon resin.

3. Sulfur-crosslinkable rubber mixture according to any of the preceding claims, **characterized in that** it comprises from 36 to 100 phr of the hydrocarbon resin.

4. Sulfur-crosslinkable rubber mixture according to any of the preceding claims, **characterized in that** the other monomer(s) is/are selected from the group of unsaturated compounds which can be polymerized cationically, comprising aromatics and/or unsaturated terpenes and/or alkenes and/or cycloalkenes.

5. Sulfur-crosslinkable rubber mixture according to Claim 4, **characterized in that** the other monomer(s) is/are selected from the group consisting of alphamethylstyrene and/or styrene and/or vinyltoluene and/or indene and/or coumarone and/or methylindene and/or methylcoumarone and/or phenol and/or olefins.

6. Sulfur-crosslinkable rubber mixture according to any of the preceding claims, **characterized in that** the softening point of the hydrocarbon resin in accordance with ASTM E28 (ring and ball) is from 60 to 99°C.

7. Sulfur-crosslinkable rubber mixture according to any of the preceding claims, **characterized in that** the molar mass Mw (weight average) of the hydrocarbon resin is from 500 to 4000 g/mol and its z-average Mz is from 2500 to 10 000 g/mol, where the molar mass (weight-average Mw and z-average Mz) is determined by means of gel permeation chromatography in accordance with DIN 55672-1.

8. Pneumatic tyre for a motor vehicle, **characterized in that** the said tyre comprises, in at least one component, at least one rubber mixture comprising at least the following constituents:

   - from 40 to 100 phr of at least one natural and/or synthetic polyisoprene and
   - 15 phr or more of at least one hydrocarbon resin which is composed of from 50 to 100% by weight of aliphatic $C_5$ monomers and of from 0 to 50% by weight of other monomers, where the Q value of the hydrocarbon resin according to formula I) is from 0.015 [°C•mol/g] to 0.050 [°C•mol/g] :

   I) Q = softening point [°C]/z-average Mz [g/mol], and where the softening point of the hydrocarbon resin in accordance with ASTM E28 (ring and ball) is from 60 to 200°C.

9. Pneumatic tyre for a motor vehicle according to Claim 8, **characterized in that** the component comprises at least the tread.

**Revendications**

1. Mélange caoutchouteux réticulable au soufre, **caractérisé en ce qu'**il contient au moins les constituants suivants :

   - 40 à 100 pce d'au moins un polyisoprène naturel et/ou synthétique et
   - 15 pce ou plus d'au moins une résine hydrocarbonée, qui est formée par 50 à 100 % en poids de monomères en $C_5$ aliphatiques et 0 à 50 % en poids d'autres monomères, la résine hydrocarbonée présentant selon la formule I) un Q de 0,015 [°C·mol/g] à 0,050 [°C·mol/g] :

   I) Q = point de ramollissement [°C]/moyenne de centrifugation Mz [g/mol], et la résine hydrocarbonée présentant un point de ramollissement selon ASTM E 28 (bille et anneau) de 60 à 200 °C ; et

   - 10 à 300 pce d'au moins une silice.

2. Mélange caoutchouteux réticulable au soufre selon la revendication 1, **caractérisé en ce qu'**il contient 15 à 300 pce de la résine hydrocarbonée.

3. Mélange caoutchouteux réticulable au soufre selon l'une quelconque des revendications précédentes, **caractérisé en ce qu'**il contient 36 à 100 pce de la résine hydrocarbonée.

4. Mélange caoutchouteux réticulable au soufre selon l'une quelconque des revendications précédentes, **caractérisé en ce que** le ou les autres monomères sont choisis dans le groupe des composés insaturés qui peuvent être polymérisés cationiquement, contenant les composés aromatiques et/ou les terpènes insaturés et/ou les alcènes et/ou les cycloalcènes.

5. Mélange caoutchouteux réticulable au soufre selon la revendication 4, **caractérisé en ce que** le ou les autres monomères sont choisis dans le groupe constitué par l'alpha-méthylstyrène et/ou le styrène et/ou le vinyltoluène et/ou l'indène et/ou la coumarone et/ou le méthylindène et/ou la méthylcoumarone et/ou le phénol et/ou les oléfines.

6. Mélange caoutchouteux réticulable au soufre selon l'une quelconque des revendications précédentes, **caractérisé en ce que** la résine hydrocarbonée présente un point de ramollissement selon ASTM E 28 (bille et anneau) de 60 à 99 °C.

**7.** Mélange caoutchouteux réticulable au soufre selon l'une quelconque des revendications précédentes, **caractérisé en ce que** la résine hydrocarbonée présente un poids moléculaire Mw (moyenne en poids) de 500 à 4 000 g/mol, et une moyenne de centrifugation Mz de 2 500 à 10 000 g/mol, la détermination du poids moléculaire (moyenne en poids Mw et moyenne de centrifugation Mz) ayant lieu par chromatographie par perméation de gel selon DIN 55672-1.

**8.** Pneu automobile, **caractérisé en ce qu'**il contient dans au moins un composant au moins un mélange caoutchouteux qui contient au moins les constituants suivants :

- 40 à 100 pce d'au moins un polyisoprène naturel et/ou synthétique et
- 15 pce ou plus d'au moins une résine hydrocarbonée, qui est formée par 50 à 100 % en poids de monomères en $C_5$ aliphatiques et 0 à 50 % en poids d'autres monomères, la résine hydrocarbonée présentant selon la formule I) un Q de 0,015 [°C·mol/g] à 0,050 [°C·mol/g] :

I) Q = point de ramollissement [°C]/moyenne de centrifugation Mz [g/mol], et la résine hydrocarbonée présentant un point de ramollissement selon ASTM E 28 (bille et anneau) de 60 à 200 °C.

**9.** Pneu automobile selon la revendication 8, **caractérisé en ce que** le composant est au moins la bande de roulement.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2006061064 A1
- EP 1707595 B1
- EP 0978533 B1
- DE 102008062368 A1
- US 3846352 A
- US 20120267026 A1
- EP 2452972 A1
- US 20100317800 A1
- US 20100139825 A1
- DE 102006004062 A1
- WO 9909036 A
- WO 2008083241 A1
- WO 2008083242 A1
- WO 2008083243 A1
- WO 2008083244 A1
- EP 2357219 A1
- WO 2010049261 A2